# FASCICULE DE BREVET EUROPEEN

(11) **EP 2 063 603 B1**
(45) Date de publication et mention de la délivrance du brevet: **26.05.2010**
(21) Numéro de dépôt: 08169456.4
(22) Date de dépôt: 19.11.2008
(51) Int. Cl.: H04L 29/06

(54) **Procédé de transmission d'une séquence vidéo vers un terminal distant**
Übertragungsverfahren einer Videosequenz zu einem entfernten Endgerät
Method of transmitting a video sequence to a remote terminal

(30) Priorité: 22.11.2007 FR 0759240
(43) Date de publication de la demande: 27.05.2009
(73) Titulaire: FRANCE TELECOM, 75015 Paris (FR)
(72) Inventeur: Cazoulat, Renaud, 35000, RENNES (FR); Ledunois, Valérie, 35890, LAILLE (FR); Roussillat, Vincent, 35530, NOYAL SUR VILAINE (FR)

(56) Documents cités:
- EP-A- 1 742 476
- US-A1- 2005 122 345

## Description

La présente invention se rapporte de manière générale au domaine des télécommunications, et plus précisément aux systèmes de messagerie qui permettent d'envoyer ou de recevoir des messages multimédia contenant des séquences vidéo. Ces systèmes de messagerie sont par exemple des systèmes de courrier électronique, ou des systèmes de messagerie instantanée, ou encore des systèmes de messagerie multimédia MMS, d'après l'anglais "Multimedia Messaging Service".

La transmission de séquences vidéo envoyées par messagerie multimédia dans un réseau de communication est problématique du fait de la charge importante qu'elle génère sur ce réseau en termes de débit. Cette charge entraîne un encombrement sur le réseau, d'autant plus important lorsque les séquences vidéo sont envoyées en multidiffusion à des destinataires dont les boîtes aux lettres ne sont pas toujours situées sur les mêmes serveurs de messagerie. De plus les fichiers vidéo correspondant à ces séquences, du fait de leur taille importante, encombrent les serveurs et les boîtes aux lettres de leurs destinataires.

La pratique de l'adressage vidéo par messagerie multimédia reste pourtant courante car elle est simple pour les utilisateurs de cette messagerie, et permet à ceux-ci de consulter les séquences vidéo qui leur ont été transmises sur le réseau de communication lié à cette messagerie, même lorsqu'ultérieurement à cette transmission ils ne sont plus connectés au réseau de communication.

Les techniques actuelles de transmission de séquences vidéo par messagerie multimédia ne parviennent pas à résoudre efficacement les problèmes d'encombrement de réseaux et de boîtes aux lettres des utilisateurs, tout en gardant la simplicité d'usage des messageries multimédia pour les utilisateurs.

En effet certaines techniques d'envoi de séquences vidéo par messagerie multimédia dans un réseau de communication utilisent un système de filtrage des pièces jointes des messages multimédia envoyés sur ce réseau. Les pièces jointes ainsi filtrées sont stockées dans un espace de stockage du réseau de communication, et remplacées par un lien vers cet espace de stockage ou vers un autre équipement permettant de récupérer les données correspondantes.

Ces techniques ne permettent pas à un utilisateur de consulter facilement les séquences vidéo des messages qu'il reçoit, puisqu'il doit télécharger ces séquences avant de pouvoir les lire. De plus il n'a pas d'aperçus des séquences vidéo dans les messages reçus, lui permettant de se rendre compte des contenus de ces séquences avant de les télécharger, ce qui l'oblige effectivement à les télécharger pour connaître leurs contenus. La connaissance avant téléchargement du contenu des séquences vidéo dans les messages reçus limiterait donc le nombre de téléchargements de séquences vidéo et donc les problèmes d'encombrement.

D'autres techniques d'envoi de séquences vidéo par messagerie multimédia dans un réseau de communication compressent ces séquences vidéo avant de les transmettre à leurs destinataires. Ces techniques limitent l'encombrement des réseaux et des boîtes aux lettres des destinataires, mais ne permettent pas à ceux-ci d'avoir accès à l'intégralité des séquences vidéo qui leur ont été initialement envoyées.

Un autre procédé évitant l'encombrement des boîtes aux lettres utilisateur avec des pièces jointes multimédia est proposé dans la demande US 2005/0122345. Pour cela, ce procédé consiste, à partir d'une application spécifique installée sur la messagerie d'un utilisateur, à coder le contenu d'un message à envoyer qui contient une pièce jointe multimédia, sous la forme d'un contenu de basse résolution correspondant à la pièce jointe, ce contenu de basse résolution intégrant une adresse de ressource URL, d'après l'anglais "Uniform Resource Locator". Lorsqu'un destinataire reçoit un tel message, il visualise le contenu de basse résolution inséré dans ce message, et s'il désire voir le contenu multimédia correspondant dans son intégralité, il lui suffit de cliquer sur ce contenu de basse résolution pour accéder au serveur sur lequel le contenu multimédia correspondant est stocké en qualité originale.

Cependant le désencombrement des réseaux et des boîtes aux lettres obtenu par ce procédé est limité: en effet, lorsqu'un destinataire clique sur l'adresse de ressource d'un contenu multimédia qui lui a été envoyé en basse résolution, ce destinataire télécharge une version intégrale de ce contenu multimédia. Il aura donc reçu et stocké en tout deux fichiers, un fichier correspondant à ce contenu multimédia en basse résolution, et un fichier correspondant à ce contenu multimédia en version intégrale, au lieu d'un seul s'il avait reçu directement la version intégrale du contenu multimédia dans le message qui lui était destiné. De plus ce procédé nécessite une application spécifique sur les systèmes de messagerie des utilisateurs émetteurs de séquences vidéo.

La présente invention a pour but de résoudre les inconvénients de la technique antérieure en fournissant des procédés et des dispositifs permettant d'envoyer à un utilisateur une version en basse résolution d'une séquence vidéo qui lui est transmise dans un message multimédia, tout en permettant à cet utilisateur de visualiser la séquence vidéo correspondante en intégralité s'il le souhaite. Dans ce dernier cas la séquence vidéo en intégralité est fournie à l'utilisateur sans encombrer fortement le réseau de communication auquel l'utilisateur est connecté.

A cette fin, l'invention propose un procédé de transmission par un serveur dans un réseau de communication d'un message multimédia comportant une séquence vidéo vers un terminal distant, ledit procédé comportant une étape de détection de ladite séquence vidéo dans ledit message par ledit serveur, **caractérisé en ce qu**'il comporte les étapes supplémentaires de:
- codage par ledit serveur de ladite séquence vidéo dans un flux échelonnable comportant une couche de base et une ou plusieurs couches de raffinement, lorsque ladite séquence vidéo n'est pas déjà codée dans un tel flux,
- stockage d'au moins une desdites couches de raffinement dans un serveur de stockage,
- et envoi de ladite couche de base et d'un lien pour récupérer ladite au moins une couche de raffinement ainsi stockée audit terminal distant.

Grâce à l'invention, on transmet sur le réseau de communication au destinataire de la séquence vidéo, seulement la couche de base et éventuellement quelques couches de raffinement d'une version échelonnable de cette séquence vidéo. Ces couches permettent au destinataire de reconstituer cette séquence vidéo dans une version basse résolution. Les données transmises sur le réseau et stockées dans la boîte aux lettres du destinataire sont ainsi limitées et permettent de désencombrer le réseau par rapport à un envoi classique de séquences vidéo dans des messages multimédia.

De plus le destinataire reçoit également un lien, par exemple vers un serveur de stockage, qui lui permet de télécharger des couches de raffinement pour reconstituer la séquence vidéo dans sa qualité initiale, de meilleure résolution que celle correspondant à la séquence vidéo reçue. Ainsi, dans le cas où le destinataire souhaite visualiser la séquence vidéo dans sa qualité initiale, il n'encombre pas plus le réseau et sa boîte aux lettres que s'il avait reçu directement la version initiale de cette séquence vidéo. En effet les couches de raffinement s'appuient sur les données déjà reçues par le destinataire pour reconstituer la séquence vidéo dans sa qualité initiale, la taille de ces couches est donc moins importante que celle de la version initiale de la séquence vidéo.

Enfin l'invention ne nécessite pas l'utilisation d'une application spécifique sur les systèmes de messagerie des utilisateurs émetteurs de séquences vidéo, puisque le codage éventuel des séquences vidéo envoyées par les utilisateurs dans un flux échelonnable s'effectue au niveau d'un serveur dans le réseau de communication. Au niveau du terminal distant qui reçoit le message transmis par le procédé selon l'invention, ce terminal nécessite l'intégration d'un décodeur de flux échelonnable pour visualiser la séquence vidéo reçue en version basse résolution. Pour visualiser la séquence vidéo reçue en intégralité, il nécessite en outre une application spécifique pour combiner les couches de raffinement téléchargées, mais cette application est par exemple téléchargée automatiquement lors de la réception du message, avec une appliquette.

L'invention concerne aussi un procédé de réception d'un message multimédia sur un terminal dans un réseau de communication, ledit message multimédia comportant une séquence vidéo codée sous la forme d'un flux échelonnable comportant au moins une couche de base, **caractérisé en ce que**:
- ledit message multimédia comporte un lien pour récupérer au moins une couche de raffinement correspondant à ladite séquence vidéo,
   et en ce qu'il comporte les étapes de:

- transmission par ledit terminal d'une requête de téléchargement à un serveur de stockage en utilisant ledit lien,
- réception par ledit terminal de ladite au moins une couche de raffinement transmise par ledit serveur de stockage en réponse à ladite requête,
- et utilisation par ledit terminal de ladite au moins une couche de raffinement pour afficher sur un écran de visualisation une séquence vidéo combinant ladite au moins une couche de raffinement avec ladite au moins une couche de base.

Le procédé de réception selon l'invention présente les mêmes avantages que le procédé de transmission selon l'invention. Il est à noter que l'étape de transmission par le terminal d'une requête de téléchargement pour récupérer les couches de raffinement stockées sur le serveur de stockage ne nécessite pas forcément une intervention de l'utilisateur du terminal distant. Cette étape est par exemple effectuée automatiquement en fonction d'un fichier de configuration dans le terminal distant, tenant compte des capacités de visualisation du terminal, et/ou des préférences utilisateur.

Selon une caractéristique avantageuse du procédé de réception selon l'invention, l'étape de transmission est précédée des étapes de:
- présentation de ladite séquence vidéo codée sous la forme d'un flux échelonnable comportant au moins une couche de base, et affichage dudit lien par ledit terminal sur ledit écran de visualisation,
- et réception par ledit terminal d'une commande correspondant à la sélection dudit lien par un utilisateur dudit terminal.

Cette caractéristique permet à l'utilisateur d'avoir un aperçu de la séquence vidéo reçue avant d'autoriser le téléchargement de couches de raffinement pour visualiser cette séquence dans une meilleure résolution.

Selon une autre caractéristique avantageuse du procédé de réception selon l'invention, l'affichage dudit lien correspond à l'affichage de la première image de ladite séquence vidéo codée sous la forme d'un flux échelonnable comportant au moins une couche de base, ledit lien étant stocké à l'intérieur de ladite première image par un procédé de stéganographie.

L'utilisation d'un procédé de stéganographie pour afficher le lien offre une meilleure ergonomie, plus instinctive, à l'utilisateur. En effet celui-ci est généralement tenté de cliquer sur la première image d'une séquence vidéo qu'il souhaite visualiser lorsqu'il estime la qualité de celle-ci non satisfaisante.

L'invention concerne également un terminal muni d'un écran de visualisation, et comprenant des moyens de réception d'un message multimédia dans un réseau de communication, ledit message multimédia comportant une séquence vidéo codée sous la forme d'un flux échelonnable comportant au moins une couche de base, **caractérisé en ce que**:
- ladite séquence vidéo est codée sous la forme d'un flux échelonnable comportant au moins une couche de base,
- ledit message multimédia comporte un lien pour récupérer au moins une couche de raffinement correspondant à ladite séquence vidéo, et en ce qu'il comporte:

- des moyens de transmission par ledit terminal d'une requête de téléchargement à un serveur de stockage en utilisant ledit lien,
- des moyens de réception par ledit terminal de ladite au moins une couche de raffinement transmise par ledit serveur de stockage en réponse à ladite requête,
- et des moyens d'utilisation par ledit terminal de ladite au moins une couche de raffinement pour afficher sur ledit écran de visualisation une séquence vidéo combinant ladite au moins une couche de raffinement avec ladite au moins une couche de base.

L'invention concerne de plus un serveur dans un réseau de communication, comportant des moyens de transmission d'un message multimédia comportant une séquence vidéo vers un terminal distant, et des moyens de détection de ladite séquence vidéo dans ledit message, **caractérisé en ce qu'**il comporte:
- des moyens de codage de ladite séquence vidéo dans un flux échelonnable comportant une couche de base et une ou plusieurs couches de raffinement, lorsque ladite séquence vidéo n'est pas déjà codée dans un tel flux,
- des moyens de stockage d'au moins une desdites couches de raffinement dans un serveur de stockage,
- et des moyens d'envoi de ladite couche de base et d'un lien pour récupérer ladite au moins une couche de raffinement ainsi stockée audit terminal distant.

L'invention concerne encore un système de transmission d'un message multimédia comportant une séquence vidéo vers un terminal distant, utilisant un réseau de communication, un serveur de stockage, et un serveur comportant des moyens de détection de ladite séquence vidéo dans ledit message, **caractérisé en ce que** ledit serveur comporte en outre:
- des moyens de codage de ladite séquence vidéo dans un flux échelonnable comportant une couche de base et une ou plusieurs couches de raffinement, lorsque ladite séquence vidéo n'est pas déjà codée dans un tel flux,
- des moyens de stockage d'au moins une desdites couches de raffinement dans ledit serveur de stockage,
- et des moyens d'envoi sur ledit réseau de communication de ladite couche de base et d'un lien pour récupérer ladite au moins une couche de raffinement ainsi stockée audit terminal distant.

L'invention concerne enfin un programme d'ordinateur comportant des instructions pour mettre en oeuvre l'un des procédés précédemment présentés, lorsqu'il est exécuté sur un ordinateur.

Les dispositifs, le système et le programme d'ordinateur présentent des avantages analogues à ceux des procédés.

D'autres caractéristiques et avantages apparaîtront à la lecture d'un mode de réalisation préféré décrit en référence aux figures dans lesquelles :
- la figure 1 représente un système de transmission selon l'invention,
- la figure 2 représente des étapes du procédé de transmission selon l'invention, tel que décrit dans ce mode de réalisation,
- la figure 3 représente un flux vidéo SVC,
- et la figure 4 représente des étapes du procédé de réception selon l'invention, tel que décrit dans ce mode de réalisation.

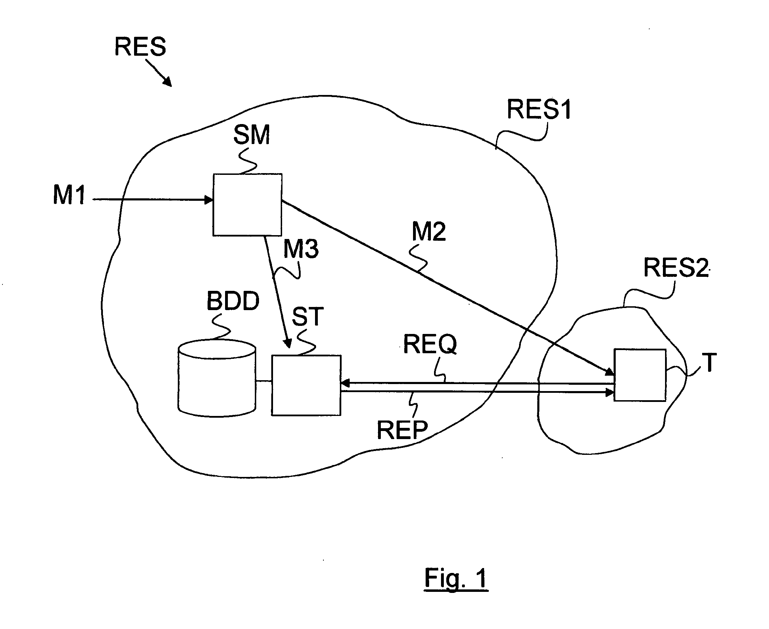

Selon un mode préféré de réalisation de l'invention, le système de transmission selon l'invention utilise un réseau de communication RES, représenté à la figure 1. Le réseau de communication RES est composé de plusieurs types de réseaux, un réseau coeur RES1, qui est par exemple le réseau Internet, et un réseau d'accès RES2 auquel est connecté un terminal T. Le réseau RES2 est par exemple le Réseau Téléphonique Commuté RTC, ou un réseau câblé en fibre optique, ou un réseau WiFi (Wireless Fidelity, selon la norme "Institute of Electronical and Electronics Engineers" (IEEE) 802.11), ou encore un réseau d'accès dit "3G" utilisant la technologie "Universal Mobile Telecommunications System" (UMTS).

Le système de transmission selon l'invention comporte un serveur de messagerie SM, dans lequel est implémenté le procédé de transmission selon l'invention, et un serveur de stockage ST auquel est connectée une base de données BDD.

Le serveur de messagerie SM est un serveur de messagerie multimédia permettant d'envoyer ou de recevoir des séquences vidéo, par exemple un serveur de courrier électronique, ou un serveur de messagerie MMS, ou encore un serveur de messagerie instantanée. Il implémente le procédé de transmission selon l'invention de manière logicielle. En plus ou en remplacement de moyens logiciels, le serveur SM comporte éventuellement des moyens matériels électroniques pour implémenter le procédé de transmission selon l'invention.

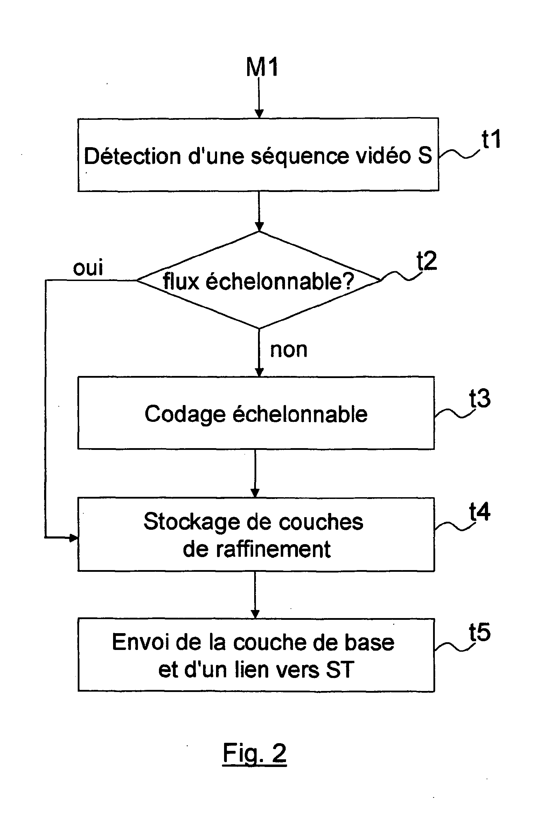

Le procédé de transmission selon l'invention est maintenant décrit sous la forme d'un algorithme comportant des étapes t1 à t5, décrit en référence à la figure 2.

L'étape t1 est la détection par le serveur SM d'une séquence vidéo S dans le message multimédia M1, destiné au terminal distant T, qui transite dans le réseau RES par l'intermédiaire du serveur SM. Cette détection se fait par l'analyse des types de fichiers attachés au message M1, par exemple le serveur SM détecte tous les fichiers dont les extensions sont "mpeg" d'après la norme "Motion Picture Expert Group", ou "avi" d'après le format "Audio Video Interleave", ou "mov" d'après le format "Quick Time", ou "flv" d'après le format "Flash Video", ou encore "h264" d'après le format H.264.

L'étape suivante t2 est l'analyse du type de codage utilisé dans la séquence vidéo S détectée à l'étape t1. Plus précisément, le serveur SM détermine dans cette étape t2 si ce codage est effectué ou non selon un flux échelonnable.

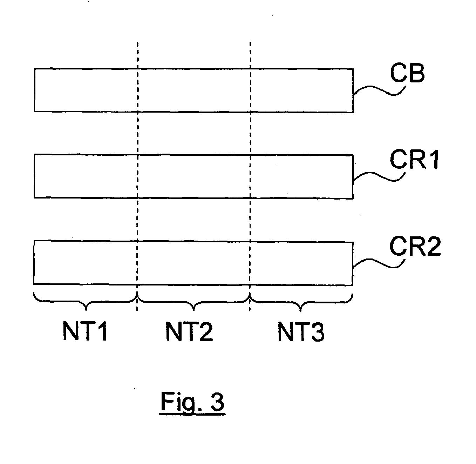

Pour rappel, les techniques de codage de séquence vidéo selon un flux échelonnable compressent le flux vidéo à coder suivant un schéma prédictif et hiérarchique en couches: le flux vidéo est décomposé en une couche de base et une ou plusieurs couches de raffinement, chacune étant emboîtée dans une couche de niveau supérieur, c'est-à-dire la couche de base ou une autre couche de raffinement. Chaque couche combinée aux informations contenues dans la couche de niveau supérieur permet d'améliorer la fréquence des images du flux décodé, sa résolution et/ou sa qualité. Une de ces techniques est par exemple la norme SVC, d'après l'anglais "Scalable Video Coding" pour "codage vidéo échelonnable", actuellement en cours de standardisation auprès du "Joint Video Team (JVT)", alliance entre le groupe de standardisation MPEG (Moving Picture Expert Group ISO/IEC JTC1/SC29/WG11) et l'UIT-T (Union Internationale des Télécommunications ITU-T SG16 Q.6), sous la forme d'une extension de la norme ISO ("International Standard Organisation") 14496-10, aussi appelée H.264/ MPEG-4 AVC ("Advanced Video Coding"). Un exemple de flux de données compressé selon cette norme est représenté à la figure 3. Il est composé d'une couche de base CB et de deux couches de raffinement CR1 et CR2, associées à la couche de base CB. Les couches de raffinement CR1 et CR2 codent des données permettant de rehausser la qualité, la résolution ou la fréquence des images codées par la couche de base CB, qui est par exemple un flux codé selon la norme AVC. La norme SVC permet également de segmenter ces couches CB, CR1 et CR2 en niveaux temporels NT1, NT2 et NT3.

Dans cette étape t2, le serveur SM détecte donc par exemple si la séquence vidéo S est codée selon la norme SVC. Dans ce cas, l'étape suivante est l'étape t4, sinon l'étape suivante est l'étape t3.

A l'étape t3, le serveur SM a détecté à l'étape t2 que la séquence vidéo S n'est pas codée selon un flux échelonnable. L'étape t3 est donc le codage de cette séquence vidéo S selon un flux échelonnable selon la norme SVC. Ce codage correspond à la conversion de la séquence vidéo S d'un format de codage dans un flux non échelonnable, par exemple un format MPEG2, à un format SVC, et correspond donc plus précisément à un transcodage de cette séquence vidéo S. Le format de départ de la séquence vidéo S ainsi que son format d'arrivée étant déterminés, ce transcodage est effectué sans difficultés particulières, selon des techniques connues par l'Homme du métier.

A la fin de cette étape t3 on obtient alors une séquence vidéo S transcodée sous la forme d'une couche de base et d'une ou plusieurs couches de raffinement.

L'étape suivante t4 est le stockage par le serveur SM des couches de raffinement extraites de la séquence vidéo S détectée à l'étape t2, si cette séquence était déjà codée selon un flux échelonnable, ou du transcodage de cette séquence vidéo S à l'étape t3, dans le serveur de stockage ST. Pour cela le serveur SM envoie un message M3 sur le réseau de communication RES au serveur de stockage ST contenant ces couches de raffinement. A la réception du message M3, le serveur de stockage ST stocke ces couches de raffinement dans la base de données BDD.

En variante, le serveur de stockage ST est situé dans la même entité physique que le serveur SM, et l'envoi du message M3 sur le réseau de communication RES n'est donc pas nécessaire.

Dans une autre variante de réalisation, si la séquence vidéo S initiale ou transcodée comporte plusieurs couches de raffinement, seules une à quelques couches de raffinement de niveaux supérieures sont stockées dans le serveur de stockage ST. La détermination des couches de raffinement qui doivent être stockées dans le serveur de stockage ST s'effectue alors selon des critères prédéterminés, par exemple selon la taille maximale du message M2 à envoyer à l'étape t5, ou sur le type de raffinement apporté par ces couches (raffinement fréquentiel, temporel, ou de qualité).

Enfin la dernière étape t5 est l'envoi par le serveur SM d'un message M2 comportant la couche de base extraite de la séquence vidéo S détectée à l'étape t2, si cette séquence était déjà codée selon un flux échelonnable, ou du transcodage de cette séquence vidéo S à l'étape t3, sur le réseau de communication RES, au terminal distant T. Le message M2 comporte également un lien pour récupérer les couches de raffinement stockées à l'étape t4 dans le serveur de stockage ST. Ce lien est par exemple une adresse de ressource URL vers le serveur de stockage ST, ou un autre type d'adresse de ressource URI, d'après l'anglais Universal Resource Identifier.

En variante de réalisation, ce lien est un identifiant permettant au terminal T de récupérer les couches de raffinement stockées dans le serveur de stockage ST, le terminal T connaissant par avance l'adresse du serveur de stockage ST.

Dans une autre variante de réalisation, ce lien est une appliquette qui effectue par exemple une authentification de l'utilisateur du terminal T avant de télécharger les couches de raffinement stockées dans le serveur de stockage ST. Cette variante de réalisation supprime la nécessité pour le terminal T d'avoir installé ou téléchargé par avance une application spécifique pour implémenter le procédé de réception selon l'invention.

De plus, si en variante de réalisation seules une à quelques couches de raffinement de niveaux supérieures de la séquence vidéo S initiale ou transcodée ont été stockées dans le serveur de stockage ST à l'étape t4, le message M2 comporte, en plus du lien et de la couche de base extraite de cette séquence vidéo S initiale ou transcodée, les couches de raffinement des niveaux moins élevés, également extraites, et qui n'ont pas été stockées à l'étape t4.

Il est à noter que dans ce mode de réalisation de l'invention, le serveur SM détecte et utilise seulement les codages selon des flux échelonnables conformes à la norme SVC, mais il est également possible d'intégrer le traitement d'autres types de codages selon des flux échelonnables par le serveur SM, notamment de futures évolutions de la norme SVC.

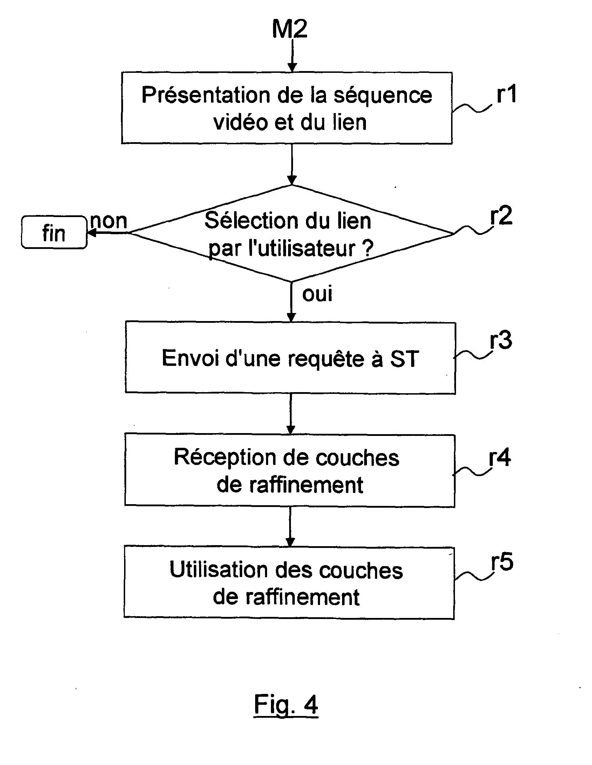

A la réception du message M2 par le terminal T, le procédé de réception selon l'invention est mis en oeuvre dans le terminal T. Ce procédé est maintenant décrit sous la forme d'un algorithme comportant des étapes r1 à r5, décrit en référence à la figure 4.

L'étape r1 est la présentation, sur un écran de visualisation du terminal T, d'une séquence vidéo lue à partir de la couche de base et éventuellement en variante des couches de raffinement reçues dans le message M2, à l'utilisateur du terminal T. Cette lecture s'effectue grâce à un décodeur SVC dans le terminal T, et s'arrête par exemple après la lecture de la première image de la séquence vidéo, les autres images n'étant lues qu'après la sélection par l'utilisateur d'une touche de lecture. Dans cette étape r1 on affiche également le lien permettant de récupérer les couches de raffinement stockées dans le serveur de stockage ST à l'étape t4, sur l'écran de visualisation.

Il est à noter que la lecture de la ou en variante des couches reçues dans le message M2 produit une séquence vidéo de basse résolution, c'est-à-dire de plus basse résolution que celle que l'on obtiendrait en combinant cette couche ou en variante ces couches, avec les couches de raffinement stockées dans le serveur de stockage ST. De plus, dans ce mode de réalisation de l'invention, le terminal T comporte un décodeur SVC, mais si dans d'autres modes de réalisation le procédé de transmission selon l'invention utilise d'autres types de codages selon des flux échelonnables, alors le terminal T comporte des décodeurs compatibles avec ces autres types de codage.

Dans cette étape r1, la lecture de la séquence vidéo et l'affichage du lien s'effectue par exemple dans une interface dite "riche" de type "Rich Media", ce qui facilite l'interactivité avec l'utilisateur. De plus, l'affichage du lien s'effectue par exemple lors de l'affichage de la première image de la séquence vidéo, par un procédé de stéganographie. Par exemple si le lien est une adresse de ressource URL, celle-ci est typiquement codée dans les bits de poids faibles de cette première image. Cette fonction de restitution de l'URL doit alors être codée dans l'interface de type "Rich Media".

L'étape suivante r2 dépend de la sélection ou non du lien affiché à l'étape r1 par l'utilisateur du terminal T, par exemple en cliquant sur la première image de la séquence vidéo présentée à l'écran de visualisation pour lecture. Si l'utilisateur ne sélectionne pas ce lien mais souhaite visualiser la séquence vidéo présentée à l'écran, celle-ci est lue en version basse résolution à partir de la couche de base et éventuellement en variante d'autres couches de raffinement reçues dans le message M2. Si au contraire l'utilisateur sélectionne ce lien, alors dans cette étape r2 le terminal T reçoit la commande de sélection de ce lien, et l'étape suivante est l'étape r3.

En variante, le terminal T contient un fichier de configuration qui permet de déterminer dans quels cas le lien affiché doit être utilisé pour télécharger ou non les couches de raffinement stockées sur le serveur de stockage ST. Dans cette variante de réalisation du procédé de réception selon l'invention on passe donc directement de l'étape r1 à l'étape r3, sans passer par l'étape r2. Ce fichier de configuration stocke par exemple des données sur les capacités du terminal T, et/ou des préférences de l'utilisateur, pour déterminer dans quel contexte les couches de raffinement stockées sur le serveur de stockage ST doivent être téléchargées. Le contexte dépend par exemple, en plus des capacités du terminal, des expéditeurs du message M1, du type de connexion de l'utilisateur, de mots-clefs contenus dans l'objet du message M1, ou d'un "statut" de l'utilisateur. Les capacités du terminal incluent par exemple un profil et des niveaux définis par la norme SVC, avec lesquels le terminal T est compatible. Le profil indique avec quels outils de cette norme le décodeur SVC du terminal est compatible, tandis que les niveaux affinent pour chaque outil le niveau de compatibilité du décodeur.

L'étape r3 est la transmission par le terminal T d'une requête de téléchargement REQ au serveur de stockage ST. Cette requête utilise le lien reçu dans le message M2, par exemple c'est un message http (d'après l'anglais Hyper Text Transfer Protocol) "GET" qui précise l'adresse de ressource URL à laquelle se trouvent les couches de raffinement à télécharger.

L'étape suivante r4 est la réception par le terminal T des couches de raffinement transmises par le serveur de stockage ST en réponse à la requête REQ, dans un message de réponse REP, par exemple un message http "POST".

Enfin la dernière étape r5 est l'utilisation par le décodeur SVC des couches de raffinement reçues à l'étape r4 pour les combiner ensemble avec la couche de base reçue dans le message M2. Le décodeur SVC lit et affiche ainsi sur l'écran de visualisation une séquence vidéo de plus haute résolution que la séquence vidéo de basse résolution correspondant à la lecture de la couche de base reçue dans le message M2.

En variante, si le message M2 reçu par le terminal contient une couche de base et une à plusieurs couches de raffinement, alors dans cette étape r5 le décodeur SVC combine les couches de raffinement reçues à l'étape r4 ensemble avec les couches reçues dans le message M2. La séquence vidéo obtenue par cette combinaison est également de plus haute résolution que la séquence vidéo correspondant à la lecture des couches reçues dans le message M2.

De plus, il est à noter que l'utilisation d'une interface "Rich Media" pour présenter le contenu du message M2 à l'utilisateur, permet d'enchaîner automatiquement la fin du téléchargement des couches de raffinement stockées sur le serveur ST à l'étape r4, avec la lecture de la séquence vidéo utilisant ces couches à l'étape r5.

## Revendications

1. Procédé de transmission par un serveur (SM) dans un réseau de communication (RES) d'un message multimédia (M1) comportant une séquence vidéo (S) vers un terminal distant (T), ledit procédé comportant une étape de détection (t1) de ladite séquence vidéo (S) dans ledit message (M1) par ledit serveur (SM), **caractérisé en ce qu'**il comporte les étapes supplémentaires de:
- codage (t3) par ledit serveur (SM) de ladite séquence vidéo (S) dans un flux échelonnable comportant une couche de base et une ou plusieurs couches de raffinement, lorsque ladite séquence vidéo (S) n'est pas déjà codée dans un tel flux,
- stockage (t4) d'au moins une desdites couches de raffinement dans un serveur de stockage (ST),
- et envoi (t5) de ladite couche de base et d'un lien pour récupérer ladite au moins une couche de raffinement ainsi stockée audit terminal distant (T).

2. Procédé de réception d'un message multimédia (M2) sur un terminal (T) dans un réseau de communication (RES), ledit message multimédia (M2) comportant une séquence vidéo codée sous la forme d'un flux échelonnable comportant au moins une couche de base, **caractérisé en ce que**:
- ledit message multimédia (M2) comporte un lien pour récupérer au moins une couche de raffinement correspondant à ladite séquence vidéo,
et **en ce qu'**il comporte les étapes de:
- transmission (r3) par ledit terminal (T) d'une requête (REQ) de téléchargement à un serveur de stockage (ST) en utilisant ledit lien,
- réception (r4) par ledit terminal (T) de ladite au moins une couche de raffinement transmise par ledit serveur de stockage (ST) en réponse à ladite requête,
- et utilisation (r5) par ledit terminal (T) de ladite au moins une couche de raffinement pour afficher sur un écran de visualisation une séquence vidéo combinant ladite au moins une couche de raffinement avec ladite au moins une couche de base.

3. Procédé de réception d'un message multimédia (M2) selon la revendication 2, **caractérisé en ce que** l'étape de transmission (r3) est précédée des étapes de:
- présentation (r1) de ladite séquence vidéo codée sous la forme d'un flux échelonnable comportant au moins une couche de base et affichage dudit lien par ledit terminal (T) sur ledit écran de visualisation,
- et réception (r2) par ledit terminal (T) d'une commande correspondant à la sélection dudit lien par un utilisateur dudit terminal (T).

4. Procédé de réception d'un message multimédia (M2) selon la revendication 3, **caractérisé en ce que** l'affichage dudit lien correspond à l'affichage de la première image de ladite séquence vidéo codée sous la forme d'un flux échelonnable comportant au moins une couche de base, ledit lien étant stocké à l'intérieur de ladite première image par un procédé de stéganographie.

5. Terminal (T) muni d'un écran de visualisation, et comprenant des moyens de réception d'un message multimédia (M2) dans un réseau de communication (RES), ledit message multimédia (M2) comportant une séquence vidéo codée sous la forme d'un flux échelonnable comportant au moins une couche de base, **caractérisé en ce que**:
- ledit message multimédia (M2) comporte un lien pour récupérer au moins une couche de raffinement correspondant à ladite séquence vidéo,
et **en ce qu'**il comporte:
- des moyens de transmission par ledit terminal (T) d'une requête (REQ) de téléchargement à un serveur de stockage (ST) en utilisant ledit lien,
- des moyens de réception par ledit terminal (T) de ladite au moins une couche de raffinement transmise par ledit serveur de stockage (ST) en réponse à ladite requête (REQ),
- et des moyens d'utilisation par ledit terminal (T) de ladite au moins une couche de raffinement pour afficher sur ledit écran de visualisation une séquence vidéo combinant ladite au moins une couche de raffinement avec ladite au moins une couche de base.

6. Serveur (SM) dans un réseau de communication (RES), comportant des moyens de transmission d'un message multimédia (M1) comportant une séquence vidéo (S) vers un terminal distant (T), et des moyens de détection de ladite séquence vidéo (S) dans ledit message (M1), **caractérisé en ce qu'**il comporte:
- des moyens de codage de ladite séquence vidéo (S) dans un flux échelonnable comportant une couche de base et une ou plusieurs couches de raffinement, lorsque ladite séquence vidéo (S) n'est pas déjà codée dans un tel flux,
- des moyens de stockage d'au moins une desdites couches de raffinement dans un serveur de stockage (ST),
- et des moyens d'envoi de ladite couche de base et d'un lien pour récupérer ladite au moins une couche de raffinement ainsi stockée audit terminal distant (T).

7. Système de transmission d'un message multimédia (M1) comportant une séquence vidéo (S) vers un terminal distant (T), utilisant un réseau de communication (RES), un serveur de stockage (ST), et un serveur (SM) comportant des moyens de détection de ladite séquence vidéo (S) dans ledit message (M1), **caractérisé en ce que** ledit serveur comporte en outre:
- des moyens de codage de ladite séquence vidéo (S) dans un flux échelonnable comportant une couche de base et une ou plusieurs couches de raffinement, lorsque ladite séquence vidéo (S) n'est pas déjà codée dans un tel flux,
- des moyens de stockage d'au moins une desdites couches de raffinement dans ledit serveur de stockage (ST),
- et des moyens d'envoi sur ledit réseau de communication (RES) de ladite couche de base et d'un lien pour récupérer ladite au moins une couche de raffinement ainsi stockée audit terminal distant (T).

8. Programme d'ordinateur comportant des instructions pour mettre en oeuvre l'un des procédés selon l'une quelconque des revendications 1 à 4, lorsqu'il est exécuté sur un ordinateur.

## Claims

1. Method of transmission by a server (SM) in a communication network (RES) of a multimedia message (M1) comprising a video sequence (S) to a remote terminal (T), said method comprising a step (t1) for detection of said video sequence (S) in said message (M1) by said server (SM), **characterized in that** it comprises the following additional steps:
- coding (t3) by said server (SM) of said video sequence (S) in a scalable stream comprising a base layer and one or more refinement layers, when said video sequence (S) is not already coded in such a stream,
- storage (t4) of at least one of said refinement layers in a storage server (ST),
- and sending (t5) of said base layer and a link to recover said at least one refinement layer duly stored on said remote terminal (T).

2. Method of reception of a multimedia message (M2) on a terminal (T) in a communication network (RES), said multimedia message (M2) comprising a video sequence coded in the form of a scalable stream comprising at least one base layer, **characterized in that**:
- said multimedia message (M2) comprises a link for recovering at least one refinement layer corresponding to said video sequence,
and **in that** it comprises the steps of:
- transmission (r3) by said terminal (T) of a download request (REQ) to a storage server (ST) by using said link,
- reception (r4) by said terminal (T) of said at least one refinement layer transmitted by said storage server (ST) in response to said request,
- and use (r5) by said terminal (T) of said at least one refinement layer to display on a display screen a video sequence combining said at least one refinement layer with said at least one base layer.

3. Method of reception of a multimedia message (M2) according to Claim 2, **characterized in that** the transmission step (r3) is preceded by steps of:
- presentation (r1) of said video sequence coded in the form of a scalable stream comprising at least one base layer and display of said link by said terminal (T) on said display screen,
- and reception (r2) by said terminal (T) of a command corresponding to the selection of said link by a user of said terminal (T).

4. Method of reception of a multimedia message (M2) according to Claim 3, **characterized in that** the display of said link corresponds to the display of the first image of said video sequence coded in the form of a scalable stream comprising at least one base layer, said link being stored inside said first image by a steganography method.

5. Terminal (T) provided with a display screen, and comprising means of receiving a multimedia message (M2) in a communication network (RES), said multimedia message (M2) comprising a video sequence coded in the form of a scalable stream comprising at least one base layer, **characterized in that**:
- said multimedia message (M2) comprises a link for recovering at least one refinement layer corresponding to said video sequence,
and **in that** it comprises:
- means of transmission, by said terminal (T) of a download request (REQ) to a storage server (ST) by using said link,
- means of reception, by said terminal (T) of said at least one refinement layer transmitted by said storage server (ST) in response to said request (REQ),
- and means of using, by said terminal (T), said at least one refinement layer to display on said display screen a video sequence combining said at least one refinement layer with said at least one base layer.

6. Server (SM) in a communication network (RES), comprising means of transmitting a multimedia message (M1) comprising a video sequence (S) to a remote server (T), and means of detecting said video sequence (S) in said message (M1), **characterized in that** it comprises:
- means of coding said video sequence (S) in a scalable stream comprising a base layer and one or more refinement layers, when said video sequence (S) is not already coded in such a stream,
- means of storing at least one of said refinement layers in a storage server (ST),
- and means of sending said base layer and a link to recover said at least one refinement layer duly stored on said remote terminal (T).

7. System of transmitting a multimedia message (M1) comprising a video sequence (S) to a remote terminal (T), using a communication network (RES), a storage server (ST), and a server (SM) comprising means of detecting said video sequence (S) in said message (M1), **characterized in that** said server also comprises:
- means of coding said video sequence (S) in a scalable stream comprising a base layer and one or more refinement layers, when said video sequence (S) is not already coded in such a stream,
- means of storing at least one of said refinement layers in said storage server (ST),
- and means of sending over said communication network (RES) said base layer and a link to recover said at least one refinement layer duly stored on said remote terminal (T).

8. Computer program comprising instructions for implementing one of the methods according to any one of Claims 1 to 4, when it is run on a computer.

## Patentansprüche

1. Verfahren zur Übertragung, durch einen Server (SM) in einem Kommunikationsnetz (RES), einer eine Videosequenz (S) enthaltenden Multimediamitteilung (M1) an ein fernes Endgerät (T), wobei das Verfahren einen Schritt der Erfassung (t1) der Videosequenz (S) in der Mitteilung (M1) durch den Server (SM) aufweist, **dadurch gekennzeichnet, dass** es die zusätzlichen Schritte aufweist:
- Codieren (t3), durch den Server (SM), der Videosequenz (S) in einem skalierbaren Strom, der eine Basisschicht und eine oder mehrere Verfeinerungsschichten aufweist, wenn die Videosequenz (S) nicht bereits in einem solchen Strom codiert ist,
- Speichern (t4) mindestens einer der Verfeinerungsschichten in einem Speicherserver (ST),
- und Senden (t5) der Basisschicht und eines Links zum Abrufen der so gespeicherten mindestens einen Verfeinerungsschicht an das ferne Endgerät (T).

2. Verfahren zum Empfang einer Multimediamitteilung (M2) in einem Endgerät (T) in einem Kommunikationsnetz (RES), wobei die Multimediamitteilung (M2) eine in Form eines mindestens eine Basisschicht aufweisenden skalierbaren Stroms codierte Videosequenz aufweist, **dadurch gekennzeichnet, dass**
- die Multimediamitteilung (M2) einen Link aufweist, um mindestens eine der Videosequenz entsprechende Verfeinerungsschicht abzurufen,
und das es die Schritte aufweist:
- einer Übertragung (r3) durch das Endgerät (T) einer Anforderung (REQ) zum Herunterladen an einen Speicherserver (ST) unter Verwendung des Links,
- des Empfangs (r4) durch das Endgerät (T) der mindestens einen Verfeinerungsschicht, die vom Speicherserver (ST) als Antwort auf die Anforderung übertragen wurde,
- und des Verwendens (r5) durch das Endgerät (T) der mindestens einen Verfeinerungsschicht, um auf einem Anzeigebildschirm eine Videosequenz anzuzeigen, die die mindestens eine Verfeinerungsschicht mit der mindestens einen Basisschicht kombiniert.

3. Verfahren zum Empfang einer Multimediamitteilung (M2) nach Anspruch 2, **dadurch gekennzeichnet, dass** dem Übertragungsschritt (r3) Schritte vorausgehen:
- des Präsentierens (r1) der in Form eines mindestens eine Basisschicht aufweisenden skalierbaren Stroms codierten Videosequenz und Anzeige des Links durch das Endgerät (T) auf dem Anzeigebildschirm,
- und des Empfangs (r2) durch das Endgerät (T) einer Steuerung entsprechend der Auswahl des Links durch einen Benutzer des Endgeräts (T).

4. Verfahren zum Empfang einer Multimediamitteilung (M2) nach Anspruch 3, **dadurch gekennzeichnet, dass** die Anzeige des Links der Anzeige des ersten Bilds der in Form eines mindestens eine Basisschicht aufweisenden skalierbaren Stroms codierten Videosequenz entspricht, wobei der Link innerhalb des ersten Bilds durch ein Verfahren der Steganographie gespeichert wird.

5. Endgerät (T), das mit einem Anzeigebildschirm versehen ist und Einrichtungen zum Empfang einer Multimediamitteilung (M2) in einem Kommunikationsnetz (RES) enthält, wobei die Multimediamitteilung (M2) eine in Form eines mindestens eine Basisschicht aufweisenden skalierbaren Stroms codierte Videosequenz aufweist, **dadurch gekennzeichnet, dass**:
- die Multimediamitteilung (M2) einen Link aufweist, um mindestens eine Verfeinerungsschicht entsprechend der Videosequenz abzurufen,
und dass es aufweist:
- Einrichtungen zur Übertragung durch das Endgerät (T) einer Anforderung (REQ) zum Herunterladen an einen Speicherserver (ST) unter Verwendung des Links,
- Einrichtungen zum Empfang durch das Endgerät (T) der mindestens einen Verfeinerungsschicht, die vom Speicherserver (ST) als Antwort auf die Anforderung (REQ) übertragen wird,
- und Einrichtungen zur Verwendung durch das Endgerät (T) der mindestens einen Verfeinerungsschicht, um auf dem Anzeigebildschirm eine Videosequenz anzuzeigen, die die mindestens eine Verfeinerungsschicht mit der mindestens einen Basisschicht kombiniert.

6. Server (SM) in einem Kommunikationsnetz (RES), der Einrichtungen zur Übertragung einer eine Videosequenz (S) enthaltenden Multimediamitteilung (M1) an ein fernes Endgerät (T) und Einrichtungen zur Erfassung der Videosequenz (S) in der Mitteilung (M1) aufweist, **dadurch gekennzeichnet, dass** er aufweist:
- Einrichtungen zum Codieren der Videosequenz (S) in einem eine Basisschicht und eine oder mehrere Verfeinerungsschichten aufweisenden skalierbaren Strom, wenn die Videosequenz (S) nicht bereits in einem solchen Strom codiert ist,
- Einrichtungen zum Speichern mindestens einer der Verfeinerungsschichten in einem Speicherserver (ST),
- und Einrichtungen zum Senden der Basisschicht und eines Links zum Abrufen der so gespeicherten mindestens einen Verfeinerungsschicht an das ferne Endgerät (T).

7. System zur Übertragung einer eine Videosequenz (S) enthaltenden Multimediamitteilung (M1) an ein fernes Endgerät (T) unter Verwendung eines Kommunikationsnetzes (RES), eines Speicherservers (ST), und eines Servers (SM), der Einrichtungen zur Erfassung der Videosequenz (S) in der Mitteilung (M1) aufweist, **dadurch gekennzeichnet, dass** der Server außerdem aufweist:
- Einrichtungen zum Codieren der Videosequenz (S) in einem eine Basisschicht und eine oder mehrere Verfeinerungsschichten aufweisenden skalierbaren Strom, wenn die Videosequenz (S) nicht bereits in einem solchen Strom codiert ist,
- Einrichtungen zum Speichern mindestens einer der Verfeinerungsschichten in dem Speicherserver (ST),
- und Einrichtungen zum Senden der Basisschicht und eines Links zum Abrufen der so gespeicherten mindestens einen Verfeinerungsschicht im Kommunikationsnetz (RES) an das ferne Endgerät (T).

8. Computerprogramm, das Anweisungen enthält, um eines der Verfahren nach einem der Ansprüche bis 4 durchzuführen, wenn es auf einem Computer ausgeführt wird.
